# EUROPEAN PATENT SPECIFICATION

(11) **EP 4 361 510 B1**
(45) Date of publication and mention of the grant of the patent: **21.10.2026**
(21) Application number: 24159242.7
(22) Date of filing: 04.04.2018
(51) Int. Cl.: F24F 3/00, F24F 3/044, F24F 7/04, F24F 11/30, F24F 11/36, F24F 11/89, F24F 11/88, G01N 21/3504, F24F 11/74, F24F 11/77, F24F 11/49, F24F 110/50, F24F 110/65

(54) **MODERATE-TO-LOW GLOBAL WARMING POTENTIAL VALUE REFRIGERANT LEAK DETECTION**
KÄLTEMITTELLECKDETEKTION MIT MITTELSCHWEREM BIS NIEDRIGEM GLOBALEM ERWÄRMUNGSPOTENZIALWERT
DÉTECTION DE FUITE DE RÉFRIGÉRANT À VALEUR POTENTIELLE DE RÉCHAUFFEMENT PLANÉTAIRE MODÉRÉE À FAIBLE

(30) Priority: 06.04.2017 US 201762482425 P
(43) Date of publication of application: 01.05.2024
(60) Divisional application: 25152519.2 / 4 528 174
(62) Document number(s) of the earlier application(s) in accordance with Art. 76 EPC: 18720486.2 / 3 607 250
(73) Proprietor: Carrier Corporation, Palm Beach Gardens, FL 33418 (US)
(72) Inventor: CHEN, Lei, Farmington, 06032 (US); LORD, Richard G., Murfreesboro, 37127 (US)
(74) Representative: Dehns

(56) References cited:
- EP-A2- 2 955 454
- WO-A1-2014/091708
- JP-A- 2016 065 614
- JP-A- 2016 176 648
- US-A1- 2015 338 314
- US-A1- 2016 178 229

## Description

### BACKGROUND

The present invention relates to a controllable moderate-to-low global warming potential (GWP) value refrigerant leak detector.

Air conditioning systems for residential or commercial buildings typically include an outdoor unit and an indoor unit. The outdoor unit drives airflow into the indoor unit where that airflow is cooled by thermal interaction with a refrigerant. This refrigerant, historically, has been provided as a fluid with a high global warming potential (GWP) value such as R134A or R410A. Thus, although the refrigerants that have been used previously are effective coolants, the negative effect they can have on the environment has led to the institution of requirements that new refrigerants which have moderate-to-low GWP values be employed instead.

Moderate-to-low GWP value refrigerants (i.e., A2L) can be mildly flammable, however, and thus their use in air conditioning systems can present a fire risk that needs to be addressed. In particular, to the extent that refrigerant leaks are possible in air conditioning systems, the use of moderate-to-low GWP value refrigerants makes the use of refrigerant leak detectors mandatory especially for indoor units of ducted residential heating, ventilation and air conditioning (HVAC) products and other similar systems. To this end, while commercial non-dispersive infrared (NDIR) sensors are available, they can be unacceptably expensive due to their optical and electronic components accounting for approximately 40-60% of the costs and generally being over-designed for leak detection applications.

That is, while the optical and electronic components of NDIR sensors are usually designed to accurately determine gas concentrations for demand based ventilation, greenhouse applications, etc., leak detection sensing requires only that the presence of refrigerant arising from leakage be detected and does not need an accurate determination of a concentration of such refrigerant.

WO 2014/091708 A1 discloses an air conditioning control system provided with a ventilation fan, a human sensor capable of detecting the presence of humans, a gas sensor capable of detecting the concentration of carbon dioxide, and a control device. When the carbon dioxide concentration detected by the gas sensor is less than a first threshold value, the control panel controls the ventilation fan such that the amount of ventilation by the ventilation fan is switched on the basis of the output signal of the human sensor.

### BRIEF DESCRIPTION

According the present invention, a controllable moderate-to-low global warming potential (GWP) value refrigerant leak detector as claimed in claim 1 is provided. The controllable moderate-to-low GWP value refrigerant leak detector includes a detection assembly. The detection assembly includes an emitter, a detector, an optical element to reflect radiation emitted by the emitter toward the detector such that the radiation passes through an elongate section of an enclosure and a band pass filter disposed along a radiation pathway between the emitter and the detector. The band pass filter is tuned for detection of the moderate-to-low GWP value refrigerant. The detector is receptive of a portion of the radiation passing through the band pass filter. The controllable moderate-to-low GWP value refrigerant leak detector further includes an actuation assembly receptive of a signal, which is reflective of a magnitude of the portion of the radiation, from the detector and configured for generation of a binary output based on the signal and for issuance of the binary output to a fan/vent controller.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic illustration of an air conditioning system;
FIG. 2 is a schematic illustration of an air conditioning system;
FIG. 3 is a schematic illustration of a controllable moderate-to-low global warming potential (GWP) value refrigerant leak detector for use with the air conditioning system of FIG. 1 (or FIG. 2);
FIG. 4 is a perspective view of a refrigerant detection sensor with its own mini-fan attached;
FIG. 5 is a schematic illustration of a controllable moderate-to-low global warming potential (GWP) value refrigerant leak detector for use with the air conditioning system of FIG. 1;
FIG. 6 is a schematic illustration of a controllable moderate-to-low global warming potential (GWP) value refrigerant leak detector for use with the air conditioning system of FIG. 1 (or FIG. 2);
FIG. 7 is a side view of an enclosure of an indoor unit of the air conditioning system of FIG. 1 (or FIG. 2);
FIG. 8 is a side view of an enclosure of an indoor unit of the air conditioning system of FIG. 1 (or FIG. 2);
FIG. 9 is a flow diagram illustrating a method of operating an optical sensor of the controllable moderate-to-low global warming potential (GWP) value refrigerant leak detector of FIG. 3; and
FIG. 10 is a schematic diagram of components and constituent logic embedded in the leak detection device in the form of firmware coded in its own programmed integrated circuit (PIC) independent of a controller of the air conditioning system of FIG. 1 (or FIG. 2).

### DETAILED DESCRIPTION

As will be described below, a refrigerant detection sensor is disclosed. The refrigerant detection sensor produces discrete, binary signals that are indicative of refrigerant leak and non-leak conditions, including warning conditions by tracking a differential intensity of radiation (e.g., infrared (IR) radiation) that is received by a detector relative to a known baseline state. The refrigerant detection sensor includes a source or emitter, a band pass filter, a detector and a circuit (e.g., a step function circuit, a monostable circuit, 1-shot circuit or another similar type of circuit) that operates by converting a continuous analog output to discrete output, including a binary output. The band pass filter can be tuned to target key refrigerants while the emitter can be a broad bandwidth IR source or an integrated broad bandwidth source. A main controller of the air conditioning unit comprising a relay receives output from the circuit for activating a fan or blower to circulate air for ventilating and diluting leaked refrigerant. Moreover, a baseline reading of the detector can be refreshed so that the sensor can operate without calibration even though the emitter degrades over time.

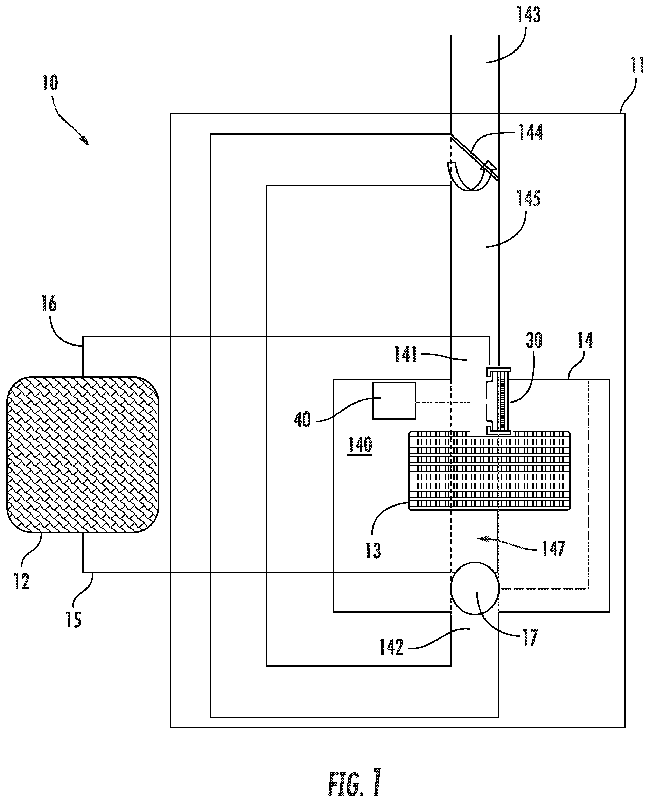

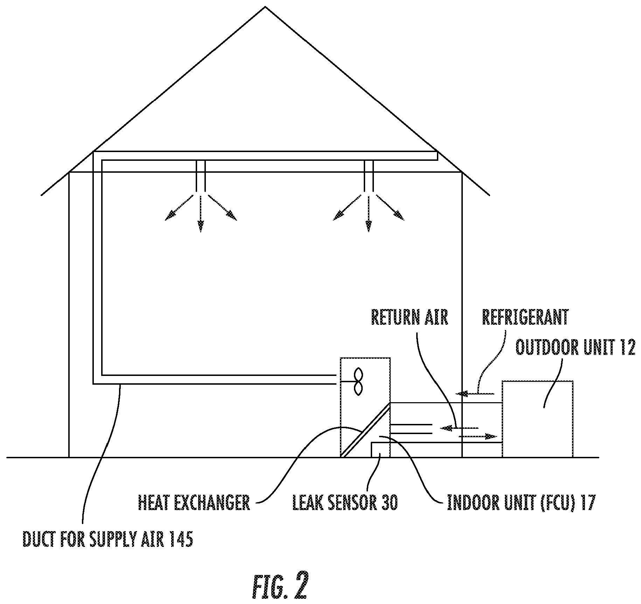

With reference to FIGS. 1, 2 and 3, an air conditioning system 10 is provided for use with a building 11, such as a residence or commercial building, and may be configured as a ductless or ducted system. For purposes of clarity and brevity, however, the following description will relate to the exemplary case of the air conditioning system 10 being a ducted system. More specifically, the leak detection sensor is disposed in a location of the fan coil unit (FCU) where refrigerant leaking from the system can pool due to a higher density than air as illustrated in FIG. 2.

Thus, as shown in FIGS. 1, 2 and 3, the air conditioning system 10 includes an outdoor unit 12 that is disposed at an exterior of the building 11, an indoor unit 13 that includes an evaporator and is disposed in an interior of the building 11 and an enclosure 14. The outdoor unit 12 includes a fan and a condenser, which is fluidly coupled to the evaporator of the indoor unit 13 by way of input piping 15 and return piping 16. The condenser, the evaporator (i.e., fan coil unit), the input piping 15 and the return piping 16 cooperatively form a refrigerant circuit for, in this case, moderate-to-low GWP value refrigerant (e.g., R32).

During operations of the refrigerant circuit, the fan of the outdoor unit 12 blows air over the condenser to remove heat from the refrigerant to eject heat and cause refrigerant vapor to condense to liquid. The cooled liquid refrigerant is then pumped through the input piping 15 toward the indoor unit 13 by pump 17, which is operably disposed on the input piping 15, whereupon the cooled refrigerant in the FCU evaporates, cooling the air passing through the FCU. Cool air is then circulated into occupied space for human comfort. Multiple FCUs can be installed in individual rooms to space temperature conditioning. Refrigerant can potentially leak into the occupied space through the FCUs or pipes. Likewise, refrigerant can leak into air duct and accumulate in an area that can potential contain an ignition source. These rare events could lead to undesirable consequences such as fire hazard and causing damages to properties.

The enclosure 14 includes a main section 140 that surrounds the indoor unit 13 and has an outlet 141 and a return air duct 142, an optional vent 143 that is opened and closed by a damper 144 and a conditioned air duct 145. During normal cooling operation, conditioned air is supplied to the occupied space through conditioned air duct 145. Return air is circulated partially or fully through the return air duct 142 to sustain desired operation. Under rare events of refrigerant leak substantial to cause hazardous conditions, such as those exceeding 25% low flammable limit (LFL), air circulation is activated to dilute the refrigerant in the building or air is directed to exist the building via damper 144 to the outdoor environment. Damper 144 is engaged based on the leak detection device response and resulting hazardous conditions for minimize the risk. Specifically, if dilution within the building is deemed insufficient for mitigating the flammability risk or combustion of refrigerant has occurred, venting to the outside is the best option.

With continued reference to FIGS. 1, 2 and 3, the air conditioning system 10 further includes a fan 17, a refrigerant detection sensor 30 and a controller 40. The fan 17 may be provided as a fan-coil unit of the evaporator and is disposed and configured for supplying air to the occupied space of the building 11. The refrigerant detection sensor 30 is disposed in the enclosure 14 and, in some cases, along the sample duct 147 and is configured for operation in first and second modes. In the first mode, the refrigerant detection sensor 30 intermittently executes a calibration or recalibration process by which the refrigerant detection sensor 30 establishes a baseline response for itself to tests run on sample drawn from the sample duct 147. In the second mode, the refrigerant detection sensor 30 executes leak detection operations with respect to a presence of refrigerant in samples drawn from the sample duct 147. The leak detection operations are thus based on comparisons between responses of the refrigerant detection sensor 30 and the baseline response in accordance with a most recent recalibration. When operating in the second mode, the refrigerant detection sensor 30 is further configured for providing a binary output of leak and non-leak signals. The controller 40 of the air conditioner is configured to control operations of the fan 17, the vent 143 and the damper 144 based on the binary output of the refrigerant detection sensor 30 that is physically wired to the controller or communicates with the controller via wired or wireless communication . The structural details of at least the refrigerant detection sensor 30 and the controller 40 and their various respective functions and operations will be described in greater detail below.

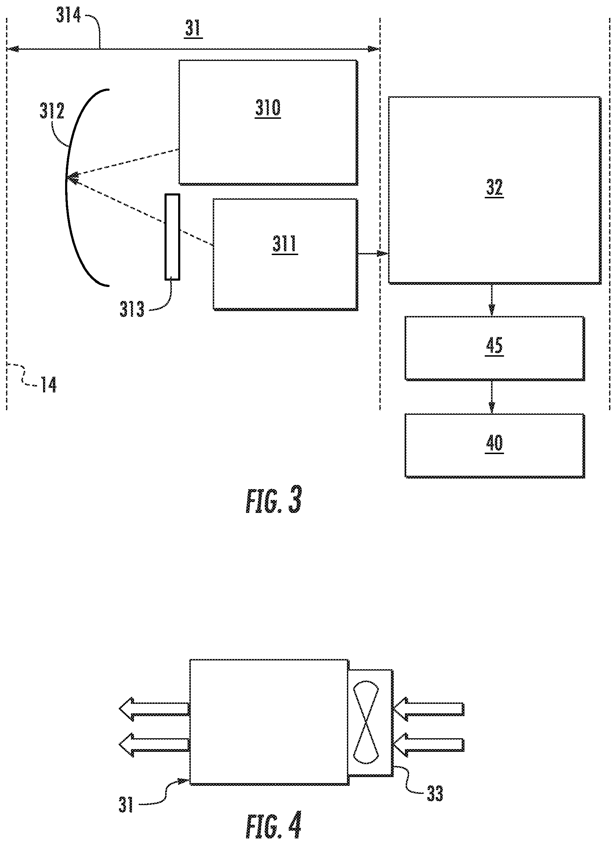

As shown in FIG. 3, the refrigerant detection sensor 30 includes an optical detection assembly 31 and supporting electronics and associated firmware 32.

The detection assembly 31 includes an emitter 310, a detector 311, an optical element 312 and a band pass filter 313. The emitter 310 may be provided as a broad wavelength emitter of electro-magnetic radiation or as a narrow band emitter of electro-magnetic radiation at specific wavelengths (e.g., 2.8 to 3.2 microns for refrigerant R32, difluoromethane). In either case, the electro-magnetic radiation may be IR radiation and, for purposes of clarity and brevity, the following description will relate to this exemplary case. The detector 311 may be provided as an IR detector, such as a thermopile or another similar device. The optical element 312 may be provided as a mirror or specular surface and is disposed and configured to reflect the IR radiation emitted by the emitter 310 toward the detector 311 such that the IR radiation passes through an elongate section 314 of the enclosure 14. The band pass filter 313 is disposed along an IR radiation pathway between the emitter 310 and the detector 311 and serves to filter out IR radiation signals that are not associated with the response of the moderate-to-low GWP value refrigerant to the IR radiation emitted by the emitter 310 while allowing IR radiation signals that are associated with the response of the moderate-to-low GWP value refrigerant to the IR radiation emitted by the emitter 310 to propagate to the detector 311. The band pass filter 313 may be provided as a glass window and may be disposed proximate to the emitter 310 (i.e., upstream from the optical element 312) or proximate to the detector 311 (i.e., downstream from the optical element 312).

With the construction described above and illustrated in FIG. 3, the radiation pathway provided by the optical element 312 is substantially longer than it otherwise could be given the width of the enclosure 14. That is, since the radiation pathway has a forward component from the emitter 310 to the optical element 312 and a reverse component from the optical element 312 to the detector 311, the radiation pathway is actually twice as long as it would be without the optical element 312. This additional length provides for additional exposure of the moderate-to-low GWP value refrigerant to the IR radiation emitted by the emitter 310 and thus a greater and more reliable response of the detector 311.

With reference to FIG. 4, the detection assembly 31 may further include a flow driving element 33. The flow driving element 33 may include a fan element, as shown in FIG. 4, a heating element or another similar device. In any case, the flow driving element 33 draws air through the detection assembly 31 and can serve to dilute impurities or refrigerants for establishing baseline responses and to improve historical tracking for calibration.

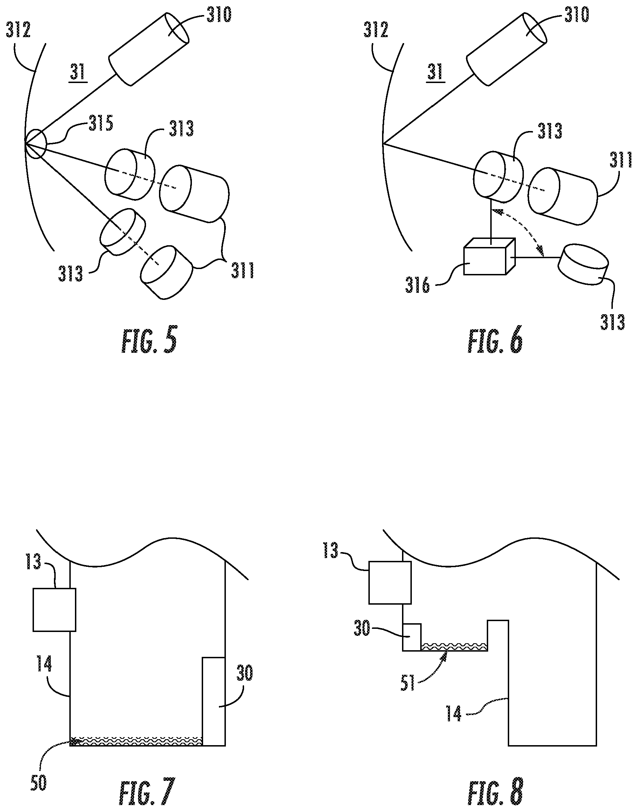

With reference to FIGS. 5 and 6, the detection assembly 31 may be configured to detect one type of the moderate-to-low GWP value refrigerant as shown in FIG. 3 or multiple types of the moderate-to-low GWP value refrigerant. For example, as shown in FIG. 5, a beam splitter 315 could be disposed along the IR radiation pathway to split the IR radiation into at least first and second beam components directed through corresponding first and second band pass filters 313 and toward corresponding first and second detectors 311. Here, the first and second band pass filters 313 may be configured to allow IR radiation of different wavelengths to pass through to the first and second detectors 311 so that IR radiation signals that are associated with the response of multiple moderate-to-low GWP value refrigerants to the IR radiation emitted by the emitter 310 are allowed to propagate to the first and second detectors 311. Meanwhile, as shown in FIG. 6, a switching element 316 could be disposed to manually or automatically switch one band pass filter 313 for another so that a type of a moderate-to-low GWP value refrigerant being detected could be correspondingly switched to another type.

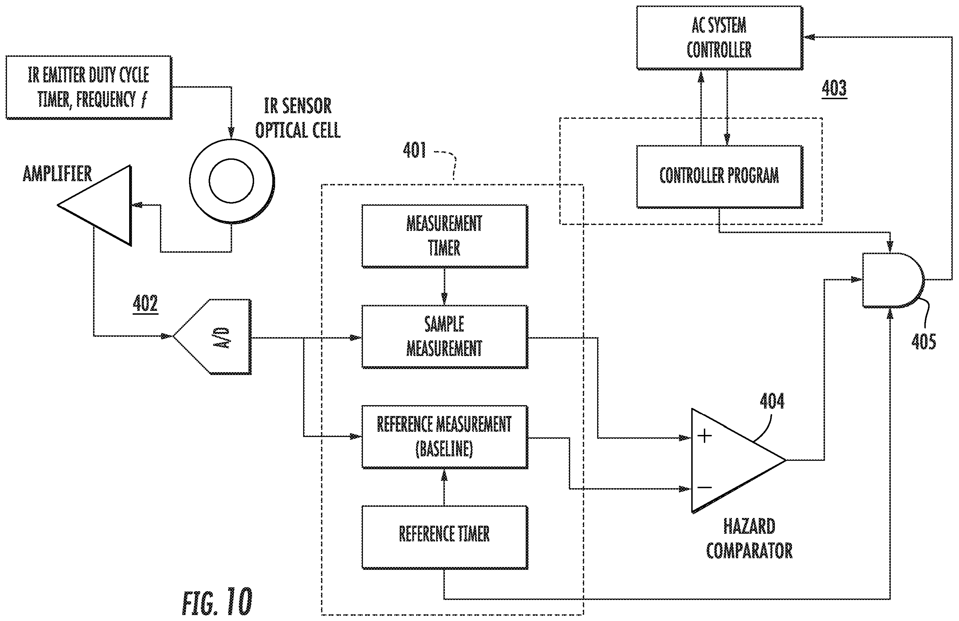

With reference back to FIG. 3, the detector (or detectors) 311 receives IR radiation signals whose spectra are reflective of either a refrigerant leak condition or a refrigerant non-leak condition. In both cases, the detector 311 issues signals corresponding to the refrigerant leak or non-leak conditions to the supporting electronics and associated firmware 32. The supporting electronics and associated firmware 32 is receptive of these signals and is configured for generation of the binary output based thereon and for issuance of the binary output to the controller 40 by way of relay 45. The supporting electronics and associated firmware 32 may include an analog-to-binary output conversion circuit or, more particularly, a step function circuit, a monostable circuit, a 1-shot circuit or another similar type of circuit. A particular design of the supporting electronics and associated firmware 32 is illustrated in FIG. 10.

In accordance with embodiments, in an event the detector (or detectors) 311 receives an IR radiation signal whose spectrum is reflective of a refrigerant leak condition, the detector 311 issues signals corresponding to the refrigerant leak condition to the supporting electronics and associated firmware 32 and the supporting electronics and associated firmware 32 generates a binary output "1" for issuance to the controller 40 so that mitigation efforts can be activated. Conversely, in an event the detector (or detectors) 311 receives an IR radiation signal whose spectrum is reflective of a refrigerant non-leak condition, the detector 311 issues signals corresponding to the refrigerant non-leak condition to the supporting electronics and associated firmware 32 and the supporting electronics and associated firmware 32 generates a binary output "0" for issuance to the controller 40 so that mitigation efforts can be deactivated or maintained in a deactivated state. As such, since the binary output is all that is needed to be issued to the controller 40, the detection assembly 31 and the supporting electronics and associated firmware 32 need not include complex optical or electronic components that evaluate a concentration of the leaked or non-leaked refrigerant in the enclosure 14.

With reference to FIGS. 7 and 8, the refrigerant detection sensor 30 may be disposed in or close to a pooling region 50 of the enclosure 14. This pooling region 50 may be defined at or close to a lowest region in an interior of the enclosure 14 (see FIG. 7) or to an elevated section 51 of the interior of the enclosure 14 where liquids and/or vapor tend to accumulate and pool together (see FIG. 8).

The refrigerant detection sensor 30 may be configured to operate on its own or the controller 40 may be configured to operate the refrigerant detection sensor 30. In either case, the intermittent baseline calibration of the refrigerant detection sensor 30 includes an establishment of a baseline response of the refrigerant detection sensor 30 to an execution of leak detection at certain times (e.g., when components of the air conditioning system 10 are activated, when the indoor unit 13 is activated, when the fan 20 is activated) and/or at predefined intervals. The self-calibration of sensor 30 may be conducted at the wavelength utilized for refrigerant leak detection or at a different wavelength enabled by a second bandpath filter, for instance the wavelength at which carbon dioxide has detectable absorption. In any case, since it is expected that the refrigerant detection sensor 30 might degrade over time, the intermittent baseline calibration of the refrigerant detection sensor 30 allows the detection assembly 31 and the supporting electronics and associated firmware 32 to continue to operate reliably. In accordance with further embodiments, however, the refrigerant detection sensor 30 may execute (on its own or in response to commands issued by the controller 40) diagnostics at the certain times and/or the predefined intervals.

A method of operating the above-described air conditioning system 10 is also disclosed. The method includes intermittently recalibrating the refrigerant detection sensor 30 at the certain times and/or the predefined intervals, setting the refrigerant detection sensor to a detection mode and iteratively determining, at the refrigerant detection sensor 30, that a concentration of the refrigerant in a sample drawn from the enclosure 14 exceeds a threshold defined in accordance with the most recent recalibration of the refrigerant detection sensor 30. The method further includes setting a binary output of the refrigerant detection sensor to correspond to a leak signal in an event the concentration exceeds the threshold or a non-leak signal in an event the concentration does not exceed the threshold and either mitigating the leakage of the refrigerant based on the binary output corresponding to the leak signal or halting the mitigation.

Mitigating of the leakage of the refrigerant includes an activation of the fan 17 and an opening of the vent 143 by the damper 144, which can be optional for some systems. Here, fluid (e.g., air) that is blown by the fan 17 mixes with the leaked refrigerant and drives the leaked refrigerant out of the building 11 via the vent 143. In so doing, the mitigation efforts reduce the risk of fire due to the refrigerant, which in this case is mildly flammable, remaining in the building 11. Conversely, the halting of the mitigation includes a deactivation of the fan 17 and a closing of the vent 143 by the damper 144. A variant of this embodiment can achieve the same mitigation results without having a damper by circulating air within a house or building to dilute the refrigerant that accumulates in the duct or any confined space. This is applicable when the concentration of refrigerant when fully dispersed in the build will lead to non-flammable situation, i.e. less than the lower flammable limit (LFL) or even more strictly less than 25% LFL.

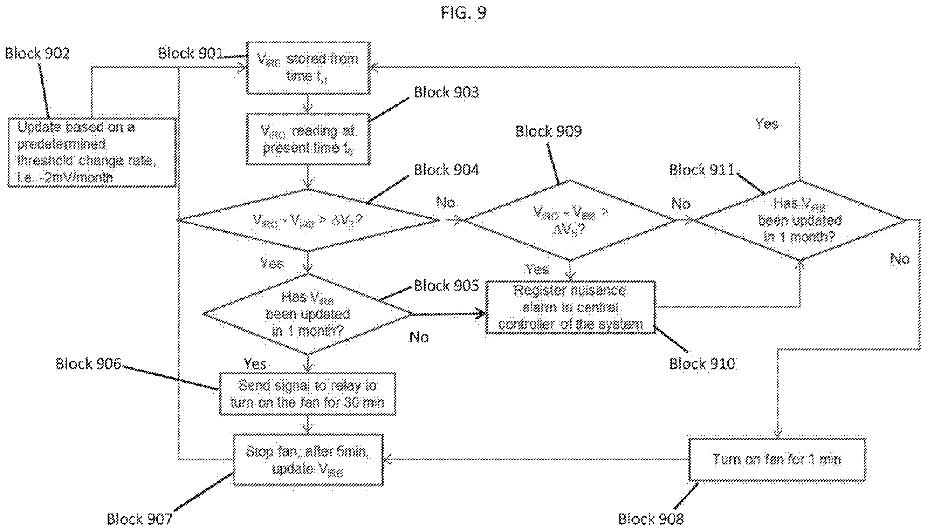

With reference to FIG. 9, a further method of operating the above-described air conditioning system 10 is provided. As shown in FIG. 9, in an initial operation, an output V_{IRB} of the detector 311 is stored (block 901) having been updated based on a predetermined threshold change rate such as -2mV/month (block 902). Subsequently, a present reading of the output V_{IRO} of the detector 311 is taken (block 903) and it is determined whether a difference between the two outputs exceed a threshold output change of a detector 311 for activating the fan 17 in the event of a refrigerant leak ΔV_{T} (block 904). If this difference exceeds the threshold output change ΔV_{T}, a signal is sent to the relay 45 and then to the system controller 40 such that the fan 17 is turned on for a given extended period of time (block 906) and then turned off (block 907). If the difference does not exceed the threshold output change ΔV_{T} but still exceeds a nuisance alarm threshold ΔV_{N} (block 909), a nuisance alarm is registered by controller 40 (block 910) and it is again determined whether the output V_{IRB} has been updated recently (block 911.). If not, the fan 17 is turned on for the abbreviated given period of time (block 908) and then turned off (block 907). If so, the output V_{IRB} of the detector 311 is stored (block 901).

With reference to FIG. 10, the controller 40 includes a firmware 401 embedded in the PIC component 403, an analog to digit converter 402 and a system controller. Other sensor control logic includes an emitter duty cycle timer that is coupled to the refrigerant detection sensor 30, an amplifier that is configured to amplify signals issued by the refrigerant detection system 30 and an A/D converter. The firmware 401 processes signals from the A/D converter and regulates a measurement timer , a measurement value (i.e. sample measurement), a reference measurement value and a reference timer. The sample measurement value and the reference measurement value are compared in hazard comparator 404 and an output of the hazard comparator 404, the reference timer value and a control program 403 of the PIC component are computed and compared as referenced in FIG. 9, where two thresholds ΔV_{T} and/or ΔV_{N} are examined for actions or the system fan or the miniature fan associated with the sensor is turned on for the abbreviated given period of time (block 908) for updating V_{IRB}. The reference timer is utilized to regulate whether the rebaselining is due while considering the most recent record of V_{IRB} update triggered by either a leak event or simply the baseline update action. The overall logic can also include temperature compensation of the detector response based on an input from a temperature sensor disposed with the sensing device or attached to the FCU. An output of the OR gate unit 405 is then fed back into the system control component 403 as a feedback control feature. The AC system controller provides the status of the system so that leak detection device PIC can determine if the logic aforementioned would be implemented or partially implemented. This is so because when the system is operating in a cooling mode, the system fan is supposed to operate such that the leak detection device remain in a standby status except the baseline update logic (block 911) is engaged if the reference timer determines the last update occurred more than a pre-determined interval (i.e., 1 month).

With the configurations described herein, the air conditioning system 10 and the refrigerant detection sensor 30 in particular will enable minimum but sufficient device configuration and functions, drift and degradation issues inherent to NDIR sensors overcome without sacrificing sufficient safety margins in the event of hazardous leaks occurring and an elimination of the need for sensor calibration.

While the present invention is provided in detail in connection with only a limited number of embodiments, it should be readily understood that the present invention is not limited to such disclosed embodiments. Rather, the present invention can be modified to incorporate any number of variations, alterations, substitutions or equivalent arrangements not heretofore described, but which are commensurate with the scope of the present invention, as defined by the appended claims. Accordingly, the present invention is not to be seen as limited by the foregoing description, but is only limited by the scope of the appended claims.

## Claims

1. A controllable moderate-to-low global warming potential, GWP, value refrigerant leak detector (30), comprising:
a detection assembly (31) comprising an emitter (310), a detector (311), an optical element (312) to reflect radiation emitted by the emitter (310) toward the detector (311) such that the radiation passes through an elongate section (314) of an enclosure (14), and a band pass filter (313) disposed along a radiation pathway between the emitter (310) and the detector (311);
**characterised in that**:
the band pass filter (313) is tuned for detection of the moderate-to-low GWP value refrigerant;
the detector (311) is receptive of a portion of the radiation passing through the band pass filter (313); and
an actuation assembly receptive of a signal, which is reflective of a magnitude of the portion of the radiation, from the detector (310) is configured for generation of a binary output based on the signal and for issuance of the binary output to a fan/vent controller (40).

## Patentansprüche

1. Steuerbarer Kältemittelleckdetektor (30) mit mittelschwerem bis niedrigem globalem Erwärmungspotenzial-, GWP,-Wert, umfassend:
eine Detektionsanordnung (31), umfassend einen Emitter (310), einen Detektor (311), ein optisches Element (312), um durch den Emitter (310) emittierte Strahlung so in Richtung des Detektors (311) zu reflektieren, dass die Strahlung durch einen länglichen Abschnitt (314) eines Gehäuses (14) hindurchtritt, und ein Bandpassfilter (313), das entlang eines Strahlungspfads zwischen dem Emitter (310) und dem Detektor (311) angeordnet ist;
**dadurch gekennzeichnet, dass**:
das Bandpassfilter (313) für die Detektion des Kältemittels mit mittelschwerem bis niedrigem GWP-Wert abgestimmt ist;
der Detektor (311) für einen Teil der Strahlung empfänglich ist, die durch das Bandpassfilter (313) hindurchtritt; und
eine Betätigungsanordnung, die für ein Signal von dem Detektor (310), das eine Größe des Teils der Strahlung widerspiegelt, empfänglich ist, für die Erzeugung einer binären Ausgabe basierend auf dem Signal und für die Ausgabe der binären Ausgabe an eine Gebläse-/Lüftungssteuerung (40) konfiguriert ist.

## Revendications

1. Détecteur de fuites de réfrigérant à valeur de potentiel de réchauffement global, PRG, modérée à faible, contrôlable (30), comprenant :
un ensemble de détection (31) comprenant un émetteur (310), un détecteur (311), un élément optique (312) pour réfléchir le rayonnement émis par l'émetteur (310) vers le détecteur (311) de sorte que le rayonnement traverse une section allongée (314) d'une enceinte (14), et un filtre passe-bande (313) disposé le long d'un trajet de rayonnement entre l'émetteur (310) et le détecteur (311) ;
**caractérisé en ce que** :
le filtre passe-bande (313) est réglé pour la détection du réfrigérant à valeur de PRG modérée à faible ;
le détecteur (311) est sensible à une partie du rayonnement traversant le filtre passe-bande (313) ; et
un ensemble d'actionnement réceptif à un signal, qui reflète une grandeur de la partie du rayonnement, provenant du détecteur (310) est configuré pour générer une sortie binaire basée sur le signal et pour émettre la sortie binaire vers un dispositif de commande de ventilateur/aération (40).
